(19) Europäisches Patentamt
European Patent Office
Office européen des brevets

(11) **EP 2 634 136 A1**

(12) **EUROPÄISCHE PATENTANMELDUNG**

(43) Veröffentlichungstag:
04.09.2013 Patentblatt 2013/36

(51) Int Cl.:
*C01B 3/00* (2006.01)    *F17C 11/00* (2006.01)
*F17C 13/00* (2006.01)

(21) Anmeldenummer: 13151857.3

(22) Anmeldetag: 18.01.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **01.03.2012   DE 102012203218**

(71) Anmelder: **ThyssenKrupp Marine Systems GmbH 24143 Kiel (DE)**

(72) Erfinder: **Kleist, Martin 24107 Kiel (DE)**

(74) Vertreter: **Patentanwälte Vollmann & Hemmer Wallstraße 33a 23560 Lübeck (DE)**

(54) **Verfahren zum Befüllen eines Metallhydridspeichers mit Wasserstoff**

(57)    Das Verfahren zum Befüllen eines Metallhydridspeichers mit Wasserstoff ermittelt den Beladedruck in Abhängigkeit der Umgebungstemperatur des Speichers.

FIG 1

EP 2 634 136 A1

**Beschreibung**

Die Erfindung betrifft ein Verfahren zum Befüllen eines Metallhydridspeichers mit Wasserstoff, insbesondere zum Befüllen eines Metallhydridspeichers eines Unterseebootes.

Wasserstoff kann entweder physikalisch, d. h. in einem Druckbehälter, oder chemisch, d. h. in gebundener Form, gespeichert werden. Um Wasserstoff in gebundener Form zu speichern, zählt es zum Stand der Technik, diesen in einer Metalllegierung zu binden. Hierzu werden so genannte Metallhydridspeicher verwendet, bei denen der Wasserstoff in das Metallgitter des Metallhydrids eingelagert wird. Dabei wird der Wasserstoff in einem Metall oder einer Metalllegierung gelöst gespeichert und bildet ein Metallhydrid. Die Speicherkapazität eines solchen Speichers ist abhängig vom Druck und der Temperatur des Speichers. Dabei steigt bei einem Metallhydridspeicher bei gegebenem Füllgrad der Gleichgewichtsdruck mit steigender Temperatur. Da der Speicher einen maximal zulässigen Betriebsdruck aufweist, ergibt sich somit in Abhängigkeit der Temperatur ein maximaler Füllgrad.

Bei einem mit Brennstoffzellentechnik angetriebenen Unterseeboot liegen die Metallhydridspeicher außerhalb des Druckkörpers im umgebenden Wasser. Der Füllgrad bestimmt sich somit bei vorgegebenem Maximaldruck durch die maximal mögliche Umgebungstemperatur. Diese wird beispielsweise mit 32°C angesetzt, diese Temperatur stellt also die maximal anzunehmende Seewassertemperatur dar.

Um sicherzustellen, dass der Metallhydridspeicher nie überladen wird, d. h. auch im ungünstigst anzunehmenden Fall keinen Wasserstoff ablassen muss, erfolgt die Beladung solcher Speicher bei einer Beladetemperatur von 32°C, also der maximal anzunehmenden Temperatur und mit dem maximal zulässigen Druck von beispielsweise 63 bar. Auf diese Weise kann einerseits ein maximaler Füllgrad sichergestellt werden, andererseits ein Überschreiten des zulässigen Betriebsdruckes, bzw. ein ungewolltes Ablassen von Wasserstoff sicher vermieden werden.

Nachteilig bei diesem Verfahren ist allerdings, dass das Verfahren aufwändig und teuer ist, und, da es einer aufwändigen Temperaturregelung bedarf, dafür ein nicht unerheblicher gerätetechnischer und energetischer Aufwand erforderlich ist.

Vor diesem Hintergrund liegt der Erfindung die Aufgabe zugrunde, ein Verfahren zum Befüllen eines Metallhydridspeichers mit Wasserstoff zu schaffen, welches technisch weniger aufwändig ist, jedoch einen hohen Füllgrad und die Einhaltung des maximalen Betriebsdrucks bei der maximal anzusetzenden Betriebstemperatur sicherstellt.

Diese Aufgabe wird gemäß der Erfindung durch ein Verfahren mit den in Anspruch 1 angegebenen Merkmalen erfüllt. Vorteilhafte Ausgestaltungen der Erfindung sind in den Unteransprüchen sowie der nachfolgenden Beschreibung angegeben.

Das erfindungsgemäße Verfahren zum Befüllen eines Metallhydridspeichers mit Wasserstoff zeichnet sich dadurch aus, dass zum Befüllen eines Metallhydridspeichers mit Wasserstoff die Umgebungstemperatur des Speichers ermittelt und der Beladedruck in Abhängigkeit der ermittelten Temperatur gewählt wird.

Grundgedanke der Erfindung ist es somit, einen Zusammenhang zwischen Füllgrad, Ladedruck und Beladetemperatur herzustellen, um auf diese Weise auch bei Temperaturen sicher beladen zu können, die nicht der zu erwartenden maximalen Umgebungstemperatur entsprechen. Dabei erfolgt die Beladung so, dass der Speicher im Wesentlichen die Umgebungstemperatur aufweist. Anhand zuvor experimentell ermittelter Werte wird ermittelt, welcher Beladedruck bei welcher Temperatur zu wählen ist, damit der anzusetzende maximal zulässige Druck bei einer anzunehmenden maximalen Temperatur nicht überschritten wird, d. h. andererseits jedoch der bei diesem Zustand maximal mögliche Füllgrad abzüglich einer Sicherheitstoleranz erreicht wird.

Das erfindungsgemäße Verfahren ist grundsätzlich zum Befüllen beliebiger Metallhydridspeicher vorteilhaft einsetzbar. Besonders vorteilhaft ist dieses Verfahren einsetzbar zum Befüllen von Metallhydridspeichern an Unterseebooten, welche vom Wasser umgeben sind und somit eine nahezu konstante Temperatur während des gesamten Beladevorgangs aufweisen. Es kann bei dem erfindungsgemäßen Verfahren also auf eine aufwändige Temperaturregelung verzichtet werden, das Umgebungswasser kann zur Temperierung des Wasserstoffs genutzt werden, die Wärmekapazität des umgebenden Seewassers ist nahezu unendlich, es kann also von einer konstanten Temperatur ausgegangen werden. In der Praxis wird der Metallhydridspeicher beim Befüllen mit Seewasser umspült, typischerweise mittels einer Zirkulationspumpe, welche das Wasser längs des Freiraums an der Außenseite des Edelstahlmantels vorbeiführt, um so die beim Beladen insbesondere anfänglich entstehende Wärme abzuführen. Mit zunehmendem Beladegrad verringert sich die Belademenge und damit auch die abzuführende Wärme, sodass gegen Ende des Befüllvorgangs die Temperatur des umgebenden Wasser erreicht wird.

Grundsätzlich kann das erfindungsgemäße Verfahren auch in anderer Umgebung als in Flüssigkeitsumgebung stattfinden, der Beladungsprozess wird dann jedoch in entsprechend angepasster, typischerweise langsamerer Geschwindigkeit erfolgen müssen. Besonders günstig ist es jedoch, wenn der Speicher in Flüssigkeit gelagert wird und zur Ermittlung des Beladedrucks die Flüssigkeitstemperatur herangezogen wird, da diese zumindest für die Beladezeit in einem Gewässer als konstant angesehen werden kann.

Dabei hat sich herausgestellt, dass es nicht erforderlich ist, den Beladedruck für jede mögliche Temperatur experimentell zu ermitteln, dieser kann gemäß der Erfindung für einen Maximaldruck von 63 bar bei 32°C vorteilhaft wie folgt definiert werden:

$$13 \times e^{\wedge}(0{,}0411 \times T) < P < 17 \times e^{\wedge}(0{,}0411 \times T) \qquad (5)$$

In dieser Gleichung ist "P" der Fülldruck in bar und "T" die Temperatur in °Celsius. Diese Gleichung ermöglicht also in einfachster Weise die Fülldruckbestimmung bei praktisch beliebiger Temperatur zwischen 0°C und 32°C. Diese Rechenregel kann zumindest für Temperaturen im Bereich von 0°C bis 32°C Anwendung finden. Vorteilhaft wird der Fülldruck jedoch größer, und zwar wie folgt gewählt, um den Füllgrad zu verbessern:

$$P > 14{,}5 * e^{\wedge}(0{,}0411 * T) \qquad (4)$$

Dabei sollte die obere Grenze wie folgt gewählt werden:

$$P < 16{,}91 * e^{\wedge}(0{,}0411 * T) \qquad (3)$$

Wenn der Fülldruck bei der vorgenannten oberen Grenze unter

$$P > 15{,}5 * e^{\wedge}(0{,}0411 * T) \qquad (2)$$

gewählt wird, dann kann im Temperaturbereich von 0°C bis 32°C ein hoher Füllgrad (>90 %) bei ausreichender Sicherheit gegenüber dem maximal zulässigen Druck erzielt werden. Dabei wird vorteilhaft der Druck wie folgt bestimmt:

$$P \approx 16{,}666 * e^{\wedge}(0{,}0411 * T) \qquad (1)$$

Unter Zugrundelegung letzterer Gleichung kann eine sichere Beladung eines Wasserstoffspeichers im Temperaturbereich zwischen 0°C und 32°C erfolgen, wobei sichergestellt wird, dass der maximale Betriebsdruck von 63 bar bei 32°C nicht überschritten wird. Der Füllgrad liegt dabei bei mehr als 95 % des theoretisch möglichen maximalen Füllgrades bei 32°C und 63 bar Fülldruck.

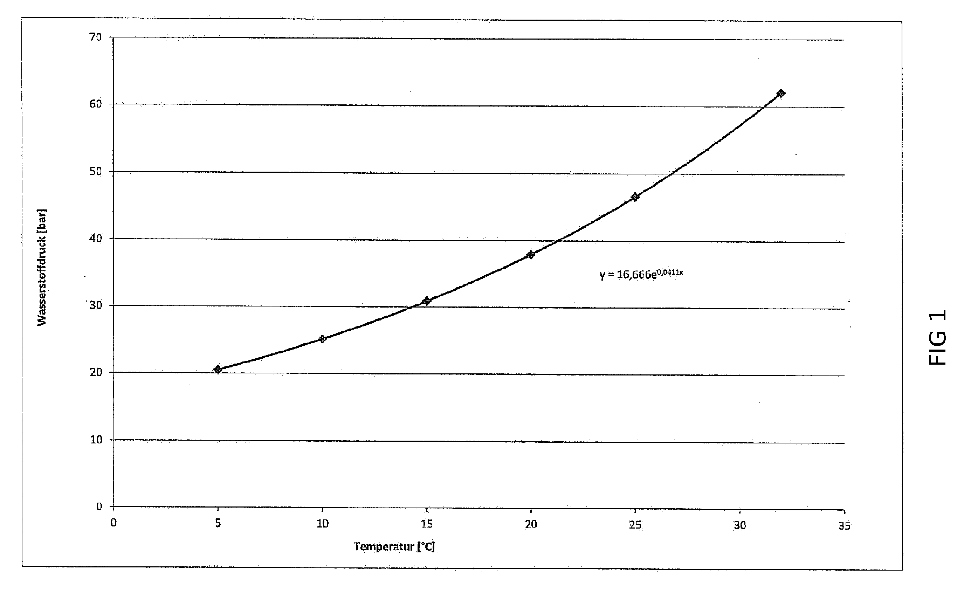

In der Zeichnung ist die temperaturabhängige Funktion des Fülldruckes in Form eines Diagrammes dargestellt, welches den Fülldruck in Abhängigkeit der Temperatur darstellt. Ausgangspunkt ist der Endpunkt dieser Kurve, welcher den maximalen Fülldruck von 63 bar bei einer anzunehmenden Maximaltemperatur von 32°C darstellt. Die weiteren Punkte stellen die experimentell ermittelten Messpunkte dar, die dadurch ermittelt wurden, dass ein gemäß dem Stand der Technik bei 32°C mit 63 bar beladener Metallhydridspeicher in 5°-Schritten heruntergekühlt und dabei der sich jeweils einstellende Gleichgewichtsdruck ermittelt wurde. Anhand dieser Messwerte wurde dann die in der Figur dargestellte Kurve ermittelt, anhand derer nun die Beladungsparameter im Bereich zwischen 0 und 32°C gewählt und bei vorgegebener Temperatur über den Beladedruck eingestellt werden können. So ergibt sich beispielsweise bei einer Temperatur von 15°C und einem Wasserstoffdruck von 30 bar genau der Füllgrad, der sich auch am oberen Endpunkt der Kurve bei 32°C und 63 bar einstellt.

Es wird also in der Praxis zunächst die Umgebungstemperatur ermittelt. Wenn diese beispielsweise 5°C beträgt, so wird mittels der Kurve bzw. der vorstehend angegebenen Rechenregel der entsprechende Fülldruck ermittelt, der sich mit etwa 20 bar ergibt. Wird also bei dieser Umgebungstemperatur, d. h. wenn der Speicher eine Temperatur von 5°C hat, der Speicher mit einem Fülldruck von 20 bar gefüllt, so ist sichergestellt, dass auch beim Erwärmen des Speichers bis zu einer Maximaltemperatur von 32°C der maximal zulässige Druck im Speicher von 63 bar nicht überschritten wird, d. h. dass es stets gewährleistet ist, dass in dem angegebenen Temperaturbereich der Wasserstoff im Speicher verbleibt und nicht druckbedingt abgelassen werden muss. Darüber hinaus ist bei Einhaltung dieser Beladungsparameter sichergestellt, dass auch bei den vorgenannten Werten, nämlich bei 5°C Umgebungstemperatur und einem Fülldruck von ca. 20 bar der Speicher zu mehr als 95 % seines maximalen Füllgrades gefüllt ist.

Es versteht sich, dass die vorstehend angegebene Gleichung (1) für einen Temperaturbereich von 0°C bis 32°C und einen maximalen Speicherdruck von 63 bar ausgelegt ist. In entsprechender Anwendung können natürlich Beladungsparameter für andere Temperaturbereiche und/oder -drücke ermittelt werden. Wie vorstehend gezeigt, können die Beladungsparameter durch Abkühlen eines gefüllten Speichers und Druck- und Temperaturmessung ermittelt werden, wobei Ausgangspunkt stets die maximal zulässige Temperatur mit dem maximal zulässigen Speicherdruck bildet.

**Patentansprüche**

1. Verfahren zum Befüllen eines Metallhydridspeichers mit Wasserstoff, bei dem die Umgebungstemperatur des Speichers ermittelt und der Beladedruck in Abhängigkeit der ermittelten Temperatur gewählt wird.

2. Verfahren nach Anspruch 1, bei dem der Speicher in Flüssigkeit gelagert wird und die Flüssigkeitstemperatur zur Ermittlung des Beladedrucks herangezogen wird.

3. Verfahren nach Anspruch 1 oder 2, bei dem der Beladedruck wie folgt definiert ist:

$$13 \times e^{\wedge}(0{,}0411 \times T) < P < 17 \times e^{\wedge}(0{,}0411 \times T) \tag{5}$$

Wobei P der Druck in bar und T die Temperatur in °C ist.

4. Verfahren nach einem der vorhergehenden Ansprüche, bei dem

$$P > 14{,}5 * e^{\wedge}(0{,}0411 * T) \quad \text{ist.} \tag{4}$$

5. Verfahren nach einem der vorhergehenden Ansprüche, bei dem

$$P < 16{,}91 * e^{\wedge}(0{,}0411 * T) \quad \text{ist.} \tag{3}$$

6. Verfahren nach einem der vorhergehenden Ansprüche, bei dem

$$P > 15{,}5 * e^{\wedge}(0{,}0411 * T) \quad \text{ist.} \tag{2}$$

7. Verfahren nach einem der vorhergehenden Ansprüche, bei dem

$$P \approx 16{,}666 * e^{\wedge}(0{,}0411 * T) \quad \text{ist.} \tag{1}$$

8. Verwendung des Verfahrens nach einem der vorhergehenden Ansprüche zum Befüllen eines an einem Unterseeboot angebrachten Metallhydridspeichers.

FIG 1

5

**EP 2 634 136 A1**

Europäisches Patentamt
European Patent Office
Office européen des brevets

# EUROPÄISCHER RECHERCHENBERICHT

Nummer der Anmeldung

EP 13 15 1857

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2009/044877 A1 (FAUDOU JEAN-YVES [FR] ET AL) 19. Februar 2009 (2009-02-19) * Zusammenfassung * * Absätze [0002], [0008], [0027] - [0032], [0038], [0046], [0049], [0005] * | 1-8 | INV. C01B3/00 F17C11/00 F17C13/00 |
| | ----- | | |
| Y | US 2003/029224 A1 (PRATT STEVEN D [US] ET AL) 13. Februar 2003 (2003-02-13) * Zusammenfassung * * Ansprüche 1,6 * * Absatz [0018] * | 1-8 | |
| | ----- | | |
| Y | EP 1 205 704 A1 (GREENFIELD AG [CH]) 15. Mai 2002 (2002-05-15) * Zusammenfassung * * Absatz [0004] * | 1-8 | |
| | ----- | | |
| A | US 7 647 194 B1 (CASEY DANIEL GLENN [US] ET AL) 12. Januar 2010 (2010-01-12) * Zusammenfassung * | 1-8 | RECHERCHIERTE SACHGEBIETE (IPC) |
| | ----- | | |
| A | EP 1 331 289 A1 (PROTON ENERGY SYS INC [US]) 30. Juli 2003 (2003-07-30) * Zusammenfassung * * Absätze [0028], [0030] * | 1-8 | C01B F17C |
| | ----- | | |

Der vorliegende Recherchenbericht wurde für alle Patentansprüche erstellt

| Recherchenort | Abschlußdatum der Recherche | Prüfer |
|---|---|---|
| München | 14. Juni 2013 | Alvarez Rodriguez, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 15 1857

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2013

| Im Recherchenbericht angeführtes Patentdokument | Datum der Veröffentlichung | Mitglied(er) der Patentfamilie | Datum der Veröffentlichung |
|---|---|---|---|
| US 2009044877 A1 | 19-02-2009 | KEINE | |
| US 2003029224 A1 | 13-02-2003 | CN 1541332 A<br>EP 1425572 A1<br>JP 3910585 B2<br>JP 2005500534 A<br>RU 2293967 C2<br>US 2003029224 A1<br>WO 03016892 A1 | 27-10-2004<br>09-06-2004<br>25-04-2007<br>06-01-2005<br>20-02-2007<br>13-02-2003<br>27-02-2003 |
| EP 1205704 A1 | 15-05-2002 | KEINE | |
| US 7647194 B1 | 12-01-2010 | KEINE | |
| EP 1331289 A1 | 30-07-2003 | EP 1331289 A1<br>JP 2003287195 A<br>US 2003146106 A1 | 30-07-2003<br>10-10-2003<br>07-08-2003 |

EPO FORM P0461

Für nähere Einzelheiten zu diesem Anhang : siehe Amtsblatt des Europäischen Patentamts, Nr.12/82

7